# EUROPÄISCHE PATENTSCHRIFT

(11) **EP 2 750 959 B1**
(45) Veröffentlichungstag und Bekanntmachung des Hinweises auf die Patenterteilung: **25.03.2015**
(21) Anmeldenummer: 12743083.3
(22) Anmeldetag: 27.07.2012
(51) Int. Cl.: B62D 1/16

(54) **LENKRADANORDNUNG FÜR EIN KRAFTFAHRZEUG**
STEERING WHEEL ARRANGEMENT FOR A MOTOR VEHICLE
ENSEMBLE VOLANT DE DIRECTION POUR VÉHICULE AUTOMOBILE

(30) Priorität: 01.09.2011 DE 102011112079
(43) Veröffentlichungstag der Anmeldung: 09.07.2014
(73) Patentinhaber: Audi AG, 85045 Ingolstadt (DE)
(72) Erfinder: ZEINAR, Peter, 85049 Ingolstadt (DE); REDEKER, Immo, 80335 München (DE)
(74) Vertreter: Brandt, Kai
(86) Internationale Anmeldenummer: PCT/EP2012/003206
(87) Internationale Veröffentlichungsnummer: WO 2013/029729

(56) Entgegenhaltungen:
- JP-U- 56 075 030

## Beschreibung

Die Erfindung betrifft eine Lenkradanordnung für ein Kraftfahrzeug, umfassend ein mit einer lenkbaren Achse des Kraftfahrzeugs über eine Lenkachse bewegungsgekoppeltes Lenkrad, welches Lenkrad drehbar an einer einen Gehäusekörper aufweisenden Lenksäule angeordnet ist, wobei in dem Gehäusekörper wenigstens eine wenigstens durch zwei sich gegenüberliegende, quer zur Längsmittelachse des Gehäusekörpers erstreckende Wände begrenzte, nach oben geöffnete Ausnehmung ausgebildet ist.

Derartige Lenkradanordnungen sind an und für sich bekannt. Die grundsätzliche Funktion entsprechender Lenkradanordnungen besteht darin, Drehbewegungen bzw. Betätigungen des Lenkrads auf eine lenkbare Achse des Kraftfahrzeugs zu übertragen, so dass das Kraftfahrzeug lenkbar ist. Die wesentlichen Bestandteile einer Lenkradanordnung sind dabei eine mit einer lenkbaren Achse des Kraftfahrzeugs verbundene, üblicherweise wenigstens abschnittsweise in einer Lenksäule angeordnete Lenkachse sowie ein an der Lenksäule angeordnetes, mit der Lenkachse und weiter der lenkbaren Achse des Kraftfahrzeugs bewegungsgekoppeltes Lenkrad.

Die aus dem Stand der Technik bekannten Lenkradanordnungen nehmen im Allgemeinen einen Teil des innerhalb von Kraftfahrzeugen bekanntermaßen begrenzt zur Verfügung stehenden Bauraums in Anspruch. Dies begründet sich insbesondere durch die konstruktive Auslegung entsprechender Lenksäulen respektive der diese bildenden Gehäusekörper, welche beispielsweise als durchgehende quaderförmige Körper ausgebildet sind. Der durch die Lenksäulen beanspruchte Bauraum ist insbesondere nicht anderweitig, das heißt etwa für die Anordnung von Anzeigemitteln oder dergleichen nutzbar. JP 56 075030 U offenbart eine Lenkradanordnung für ein Kraftfahrzeug. Diese Lenkradanordnung umfasst neben einem Lenkrad ein Gehäuseteil mit einer in einer gehäuseteilseitigen Wandung gebildeten Darstellungsfläche.

Der Erfindung liegt das Problem zugrunde, eine im Hinblick auf eine günstige Bauraumnutzung verbesserte Lenkradanordnung anzugeben.

Das Problem wird erfindungsgemäß durch eine Lenkradanordnung gemäß Anspruch 1 gelöst.

Die erfindungsgemäße Lenkradanordnung ermöglicht im Vergleich zu bekannten Lenkradanordnungen eine verbesserte Bauraumnutzung, was sich im Wesentlichen daraus ergibt, dass die der Lenkradanordnung zugehörige Lenksäule respektive der diese bildende Gehäusekörper mit wenigstens einer Ausnehmung versehen ist, welche Ausnehmung im Weiteren noch zu nennende Vorteile hinsichtlich der Bauraumnutzung innerhalb des Kraftfahrzeugs erlaubt.

Unter der Längsmittelachse des Gehäusekörpers der Lenksäule ist die gedachte Verlängerung der Lenkachse in axialer Richtung bzw. Längsrichtung zu verstehen.

Die Ausnehmung ist in Richtung der Längsmittelachse des Gehäusekörpers durch zwei sich gegenüberliegende, quer zur Längsmittelachse des Gehäusekörpers erstreckende Wände begrenzt. Dabei ist unter einer quer zur Längsmittelachse des Gehäusekörpers verlaufenden Erstreckungsrichtung nicht allein eine tatsächlich rechtwinklige bezüglich der Längsmittelachse des Gehäusekörpers verlaufende Erstreckung entsprechender Wände zu verstehen, vielmehr können die Wände auch bezüglich einer Vertikalebene geneigt zur Längsmittelachse des Gehäusekörpers verlaufen, so dass die Längsmittelachse des Gehäusekörpers die durch die jeweilige Wand aufgespannte Ebene nicht rechtwinklig, sondern winklig geneigt durchsetzt.

Selbstverständlich befindet sich zwischen den beiden sich gegenüberliegenden, quer zur Längsmittelachse des Gehäusekörpers erstreckenden Wänden wenigstens eine weitere Wand, welche eine Verbindung zwischen den beiden sich gegenüberliegenden Wänden herstellt. Die durch die weitere Wand aufgespannte Ebene kann in vertikaler oder horizontaler Richtung orientiert sein. Die weitere Wand kann wenigstens eine Durchbrechung, das heißt wenigstens eine Öffnung aufweisen.

Die in der Lenksäule respektive dem dieser zugehörigen Gehäusekörper vorgesehene Ausnehmung ist nach oben geöffnet. Hierunter ist zu verstehen, dass die Ausnehmung bezogen auf die Längsmittelachse des Gehäusekörpers in radialer bzw. vertikaler Richtung geöffnet ist. Insbesondere im in einem Kraftfahrzeug verbauten Zustand der Lenkradanordnung ist die Ausnehmung sonach in Richtung einer vertikal nach oben ragenden, quer zur Längsachse des Kraftfahrzeugs verlaufenden Achse geöffnet.

Absolute Abmessungen wie Höhe, Breite, Tiefe der Ausnehmung sind grundsätzlich frei wählbar und abhängig von den entsprechenden Abmessungen der Lenksäule respektive des Gehäusekörpers. Insbesondere hängen diese auch von dem Anwendungszweck der Ausnehmung ab. Gleiches gilt für die Form der Ausnehmung respektive das durch die Ausnehmung beschriebene Volumen. Typische Formen der Ausnehmungen sind z. B. quaderförmig oder wannenförmig.

Die der Lenkradanordnung zugehörige Lenksäule kann ein- oder mehrteilig ausgeführt sein, wobei in letzterem Falle entsprechende Lenksäulenteile lösbar oder unlösbar zu einer Lenksäule verbindbar oder verbunden sind. Die Lenksäule kann z. B. über Spritzgießverfahren aus einem Kunststoffmaterial gefertigt sein.

Es ist möglich, dass die Ausnehmung ferner durch wenigstens zwei sich in Richtung der Längsmittelachse des Gehäusekörpers erstreckende Seitenwände des Gehäusekörpers begrenzt ist. Mithin ist die Ausnehmung in dieser Ausführungsform im Wesentlichen durch vier oder gegebenenfalls fünf Wände, das heißt die sich gegenüberliegenden quer zur Längsmittelachse des Gehäusekörpers erstreckenden Wände sowie die beiden, bevorzugt ebenso gegenüberliegend angeordneten, sich in Richtung der Längsmittelachse des Gehäusekörpers erstreckenden Seitenwände sowie gegebenenfalls eine die Ausnehmung nach unten abschließende horizontale Wand im Sinne eines Bodens begrenzt. Es ist denkbar, dass wenigstens eine Seitenwand ebenso mit einem gewissen Winkel geneigt zur Längsmittelachse verläuft, so dass diese die Ausnehmung in Richtung der Längsmittelachse des Gehäusekörpers verjüngt bzw. erweitert. Mit anderen Worten ist eine veränderliche Breite der Ausnehmung realisierbar, was gleichermaßen den hinsichtlich des Designs und somit der Anpassbarkeit an eine Vielzahl an unterschiedlichen Verbausituationen freien Charakter der Ausnehmung und somit auch der der erfindungsgemäßen Lenkradanordnung zugehörigen Lenksäule anzeigt.

Die Tiefe der Ausnehmung entspricht mindestens der Lage der Längsmittelachse des Gehäusekörpers. Denkbar ist es auch, dass die Tiefe der Ausnehmung die Lage der Längsmittelachse des Gehäusekörpers überschreitet. Demnach weist die Ausnehmung, welche insbesondere als Aufnahmebereich für einen bestimmten Gegenstand ausgebildet sein kann, eine ausreichende Tiefe auf, so dass in dieser ein entsprechender Gegenstand hinreichend sicher lagerbar ist, das heißt selbst bei abrupten Beschleunigungsvorgängen eines Kraftfahrzeugs nicht aus der Ausnehmung bewegt wird. Bezugspunkt für die Tiefe der Ausnehmung, worunter im Wesentlichen deren vertikale Erstreckung zu verstehen ist, ist die Lage der Längsmittelachse des Gehäusekörpers, welche sich wiederum aus den Abmessungen des Gehäusekörpers ergibt.

Es ist ferner möglich, dass die Ausnehmung als Durchgangsöffnung ausgebildet ist und den Gehäusekörper vollkommen durchbricht. In dieser Ausführungsform ist die Lenksäule sonach an wenigstens einer Stelle, insbesondere in vertikaler Richtung, vollkommen durchbrochen, das heißt die Tiefe der Ausnehmung entspricht der Höhe des Gehäusekörpers. Die übrigen Abmessungen sowie die Form der als Durchgangsöffnung ausgebildeten Ausnehmung sind frei wählbar. In dieser Ausführungsform ist die Ausnehmung insofern sowohl nach unten als auch nach oben geöffnet.

Es ist denkbar, dass wenigstens eine der sich quer zur Längsmittelachse des Gehäusekörpers erstreckenden Wände geneigt bezüglich einer Vertikalebene verläuft. Mithin ist eine sowohl in funktioneller sowie gegebenenfalls fertigungstechnischer Hinsicht verbesserte konstruktive Gestaltung des Gehäusekörpers gegeben. Eine Neigung entsprechender sich quer zur Längsachse erstreckender Wände kann bei Integration entsprechender Funktions-, Anzeige- oder Bedienelemente in den Gehäusekörper der Lenksäule in ergonomischer Hinsicht von Vorteil sein. Eine Neigung kann beispielsweise auch im Sinne einer Entformungsschräge ein leichteres Entformen des Gehäusekörpers aus einer Spritzgießform erlauben.

Grundsätzlich muss die Neigung nicht linear, das heißt mit einem festen Winkel respektive einer festen Steigung bezüglich der Vertikalebene verlaufen. Vielmehr sind auch in Richtung der Längsmittelachse des Gehäusekörpers konvex oder konkav gekrümmte Ausgestaltungen entsprechender Wände denkbar. Verlaufen beide Wände entsprechend geneigt, ist es möglich, dass diese gleiche oder unterschiedliche Neigungswinkel und/oder Krümmungen aufweisen.

In bevorzugter Ausführungsform ist in oder an der dem Lenkrad abgewandten, sich quer zur Längsmittelachse erstreckenden Wand des Gehäusekörpers wenigstens ein Anzeigemittel oder ein Teil wenigstens eines Anzeigemittels angeordnet. Mithin bildet die entsprechende Wand des Gehäusekörpers eine Anlagefläche oder einen Aufnahmebereich für ein Anzeigemittel wie ein Display oder dergleichen. Möglich ist es auch, ein Anzeigemittel in die entsprechende Wand des Gehäusekörpers zu integrieren, das heißt die Wand mit einer entsprechenden Aussparung für wenigstens ein Anzeigemittel zu versehen. Es handelt sich hierbei um eine bauraumoptimierte Nutzung der Ausnehmung des Gehäusekörpers der Lenksäule, welche wenigstens abschnittsweise ein entsprechendes Anzeigemittel aufnimmt. Gleichermaßen handelt es sich um eine besonders ergonomische Anordnung eines Anzeigemittels, da sich gezeigt hat, dass sich ein besonders vorteilhafter Blickwinkel des Fahrers auf das Anzeigemittel ergibt. Zudem ist die Anordnung aus sicherheitstechnischen Gesichtspunkten vorteilhaft, da der Fahrer seinen Blick auf besonders schnelle Weise von dem aktuellen Verkehrsgeschehen im Vorfeld eines Kraftfahrzeugs auf die auf dem Anzeigemittel dargestellten Inhalte wenden kann und umgekehrt. Selbstverständlich ist das Anzeigemittel entsprechend so angeordnet, dass die auf diesem respektive einer diesem zugehörigen Anzeigefläche darstellbaren Inhalte vom Fahrer gut erkennbar sind. Gegebenenfalls kann innerhalb des Gehäusekörpers der Lenksäule oder allgemein mit dem Anzeigemittel gekoppelt eine geeignete Schwenkvorrichtung vorgesehen sein, welche ein Verschwenken bzw. Verkippen des Anzeigemittels in verschiedenen Freiheitsgraden (oben, unten, links, rechts) ermöglicht.

Es ist ebenso denkbar, den durch die in der Lenksäule vorgesehene Ausnehmung zusätzlich zur Verfügung stehenden Bauraum derart zu nutzen, dass insgesamt ein in seiner Anzeigefläche größeres Anzeigemittel verwendet werden kann. Das Anzeigemittel kann sonach einerseits abschnittsweise an der entsprechenden dem Lenkrad abgewandten, sich quer zur Längsmittelachse erstreckenden Wand des Gehäusekörpers der Lenksäule und andererseits abschnittsweise an einem Bereich eines Kraftfahrzeugs, insbesondere einer Instrumententafel oder dergleichen, angeordnet sein. Letztere Ausführungsform erlaubt sonach quasi eine nach unten, in die Ausnehmung der Lenksäule verlängerte lnstrumententafel, so dass das Bauraumangebot für größere oder gegebenenfalls weitere Anzeigemittel erweitert ist.

Zweckmäßig ist zwischen Lenkrad und Lenkachse im Bereich der Lenksäule wenigstens ein Drehbewegungen des Lenkrads auf die Lenkachse übertragendes Umlenkgetriebe geschaltet. Das Umlenkgetriebe dient der Übersetzung von Drehbewegungen des Lenkrads auf die Lenkachse, welche die Drehbewegungen weiter auf die lenkbare Achse eines Kraftfahrzeugs überträgt. Durch eine entsprechende Auswahl und Dimensionierung der das Umlenkgetriebe bildenden Getriebeelemente sind Getriebeübersetzungen realisierbar. Grundsätzlich handelt es sich hierbei um eine mechanische Kopplung zwischen Lenkrad, Lenkachse und lenkbarer Achse. Es ist denkbar, mehrere entsprechende Umlenkgetriebe vorzusehen. Das Umlenkgetriebe kann beispielsweise als Stirnradgetriebe ausgebildet sein, wobei jedoch auch andere Bauarten entsprechender Umlenkgetriebe möglich sind.

Das Umlenkgetriebe kann vorteilhaft wenigstens zwei benachbart zu der Ausnehmung des Gehäusekörpers angeordnete, insbesondere als Zahnrad ausgebildete, Getriebeelemente aufweisen, welche Getriebeelemente über wenigstens eine diese verbindende Getriebewelle miteinander bewegungsgekoppelt sind. Mithin ist es möglich, den Bereich der Ausnehmung durch eine entsprechende Anordnung von Getriebeelementen zu umgehen, das heißt entsprechende Drehbewegungen des Lenkrads über das Umlenkgetriebe innerhalb des Gehäusekörpers der Lenksäule an der Ausnehmung vorbeizuführen. Somit ragt kein von dem Umlenkgetriebe umfasstes Getriebeelement in die Ausnehmung hinein. Benachbart zu der dem Lenkrad zugewandten Seite der Ausnehmung bzw. im Bereich der dem Lenkrad zugewandten Stirnseite des Gehäusekörpers lagefest angeordnete Getriebeelemente nehmen Drehbewegungen des Lenkrads auf, übertragen diese, gegebenenfalls übersetzt, an die Getriebewelle, welche selbstverständlich entsprechende mit den Getriebeelementen kämmende Abschnitte aufweist, von welcher diese weiter auf benachbarte zu der dem Lenkrad abgewandten Seite der Ausnehmung bzw. im Bereich der dem Lenkrad abgewandten Stirnseite des Gehäusekörpers angeordnete Getriebeelemente und weiter auf die lenkbare Achse übertragen werden.

Bevorzugt ist die Getriebewelle in einer Bohrung einer die Ausnehmung seitlich begrenzenden Seitenwand des Gehäusekörpers angeordnet. Es handelt sich hierbei um eine Integration der Getriebewelle in die Seitenwand, wobei selbstverständlich sichergestellt ist, dass die Getriebewelle innerhalb der Seitenwand störungsfrei drehbar gelagert ist.

Alternativ ist es möglich, dass die Bewegungskopplung zwischen Lenkrad und lenkbarer Achse elektronisch über eine, insbesondere wenigstens eine Drehbewegungen des Lenkrads sensierende Sensorik, welche mit wenigstens einem zur Ausführung von Lenkbewegungen der lenkbaren Achse ausgebildeten Aktor kommuniziert, aufweisende, Steuereinrichtung erfolgt. Diese Ausführungsform betrifft eine sogenannte steer-by-wire-Lenkung, welche im Wesentlichen elektronisch, das heißt gesteuert über eine dazu ausgebildete Steuereinrichtung erfolgt. Das Prinzip beruht darauf, Drehbewegungen des Lenkrads über eine Sensorik zu erfassen und in entsprechende elektronische Lenksignale umzusetzen, welche Lenksignale an einen Aktor übermittelt werden, welcher auf Basis der Lenksignale eine Betätigung der lenkbaren Achse des Kraftfahrzeugs und somit einen Lenkvorgang bewirkt.

Daneben betrifft die Erfindung ein Kraftfahrzeug, umfassend eine Lenkradanordnung wie vorstehend beschrieben. Grundsätzlich gelten zum erfindungsgemäßen Kraftfahrzeug die gleichen Ausführungen wie zur erfindungsgemäßen Lenkradanordnung.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine perspektivische Prinzipdarstellung einer erfindungsgemäßen Lenkradanordnung gemäß einer beispielhaften Ausführungsform;
- Fig. 2: eine Aufsicht auf die in Fig. 1 gezeigte Lenkradanordnung;
- Fig. 3: eine Schnittansicht einer Prinzipdarstellung einer erfindungsgemäßen Lenkradanordnung gemäß einer weiteren beispielhaften Ausführungsform;
- Fig. 4: eine Schnittansicht einer Prinzipdarstellung einer erfindungsgemäßen Lenkradanordnung gemäß einer weiteren beispielhaften Ausführungsform;
- Fig. 5: eine Schnittansicht einer Prinzipdarstellung einer erfindungsgemäßen Lenkradanordnung gemäß einer weiteren beispielhaften Ausführungsform; und
- Fig. 6: eine Aufsicht einer Prinzipdarstellung einer erfindungsgemäßen Lenkradanordnung gemäß einer weiteren beispielhaften Ausführungsform.

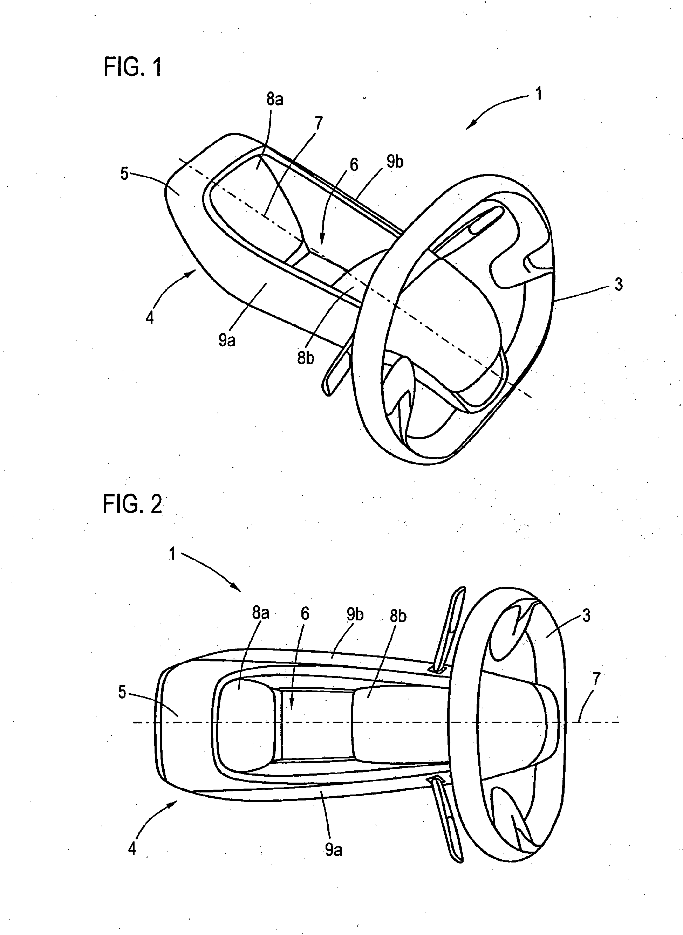

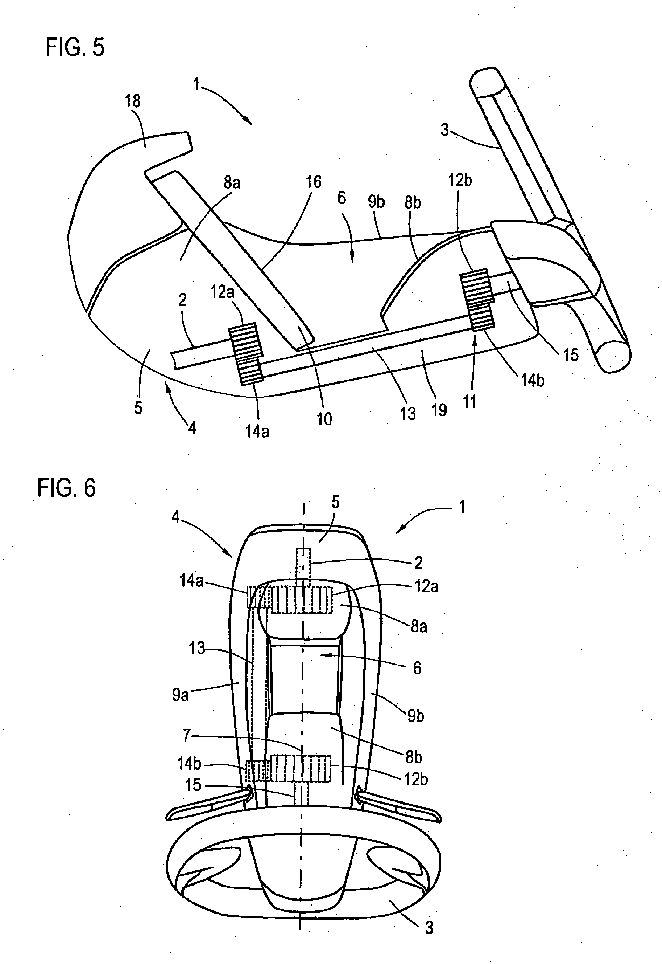

Fig. 1 zeigt eine perspektivische Prinzipdarstellung einer erfindungsgemäßen Lenkradanordnung 1 gemäß einer beispielhaften Ausführungsform. Fig. 2 zeigt eine entsprechende Aufsicht auf die in Fig. 1 gezeigte Lenkradanordnung 1. Die Lenkradanordnung 1 ist Teil eines Kraftfahrzeugs (nicht gezeigt) und umfasst ein mit einer lenkbaren Achse (nicht gezeigt), insbesondere einer lenkbaren Vorderachse, des Kraftfahrzeugs über eine Lenkachse 2 (vgl. Fig. 5) bewegungsgekoppeltes Lenkrad 3, welches Lenkrad 3 drehbar an einer Lenksäule 4 angeordnet ist. Die Lenksäule 4 weist einen Gehäusekörper 5 auf. Ersichtlich können an dem Gehäusekörper 5 neben dem Lenkrad 3 weitere, nicht näher bezeichnete Bedienelemente, wie Schwenkhebel oder dergleichen, angeordnet sein.

Ersichtlich unterscheidet sich die erfindungsgemäße Lenksäule 4 respektive der dieser zugehörige Gehäusekörper 5 von konventionellen Lenksäulen durch eine zentrale, in dem Gehäusekörper 5 ausgebildete, nach oben bzw. in vertikaler Richtung geöffnete Ausnehmung 6.

Die Ausnehmung 6 ist in Richtung der Längsmittelachse 7 des Gehäusekörpers 5 durch zwei sich gegenüberliegende, quer zur Längsmittelachse 7 des Gehäusekörpers 5 erstreckende Wände 8a, 8b begrenzt. Unter der Längsmittelachse 7 des Gehäusekörpers 5 ist die gedachte Verlängerung der Lenk-achse 2 in axialer Richtung bzw. Längsrichtung zu verstehen. Die sich quer zur Längsmittelachse 7 des Gehäusekörpers 5 erstreckenden Wände 8a, 8b verlaufen geneigt bezüglich einer Vertikalebene. Die Wände 8a, 8b können ferner mit einer gewissen Krümmung versehen sein, so dass diese in Richtung der Längsmittelachse 7 des Gehäusekörpers 5 wenigstens abschnittsweise gewölbt verlaufend ausgeführt sind. In Richtung quer zur Längsmittelachse 7 des Gehäusekörpers 5 ist die Ausnehmung 6 durch jeweilige sich in Richtung der Längsmittelachse 7 des Gehäusekörpers 5 erstreckende und gegenüberliegend angeordnete Seitenwände 9a, 9b begrenzt.

Insgesamt ist der Gehäusekörper 5 der Lenksäule 4 ein bezüglich einer diesen in Richtung der Längsmittelachse 7 mittig durchsetzenden Vertikalebene symmetrisches Bauteil. Die Ausnehmung 6 respektive das dieser entsprechende Volumen entspricht in der gezeigten Ausführungsform einer Wannenform.

Grundsätzlich entspricht die Tiefe der Ausnehmung 6 mindestens der horizontalen Lage der Längsmittelachse 7 des Gehäusekörpers 5. Denkbar ist es auch, dass die Tiefe der Ausnehmung 6 die horizontale Lage der Längsmittelachse 7 des Gehäusekörpers 5 überschreitet. Durch die Tiefe der Ausnehmung 6 bezogen auf die vertikalen Abmessungen des Gehäusekörpers 5 ist sonach ein Aufnahme- und/oder Funktionsbereich innerhalb der Lenksäule 4 geschaffen, welcher in Anbetracht des innerhalb von Kraftfahrzeugen nur begrenzt zur Verfügung stehenden Bauraums Vorteile aufweist.

In der in den Figuren gezeigten beispielhaften Ausführungsform ist die Ausnehmung 6 als Durchgangsöffnung bzw. Durchbrechung ausgebildet, das heißt sie durchbricht den Gehäusekörper 5 der Lenksäule 4 in vertikaler Richtung vollkommen. Mithin entspricht die maximale Tiefe der Ausnehmung 6 im Wesentlichen den vertikalen Abmessungen des Gehäusekörpers 5 der Lenksäule 4.

Die Lenksäule 4 respektive der Gehäusekörper 5 können als ein ein- oder mehrteiliges Bauteil ausgeführt sein. Es handelt sich dabei bevorzugt um ein aus einem Kunststoffmaterial gebildetes Spritzgießbauteil, welches sowohl in fertigungstechnischer Hinsicht als auch bezüglich der Design- bzw. Konstruktionsfreiheit Vorteile bietet.

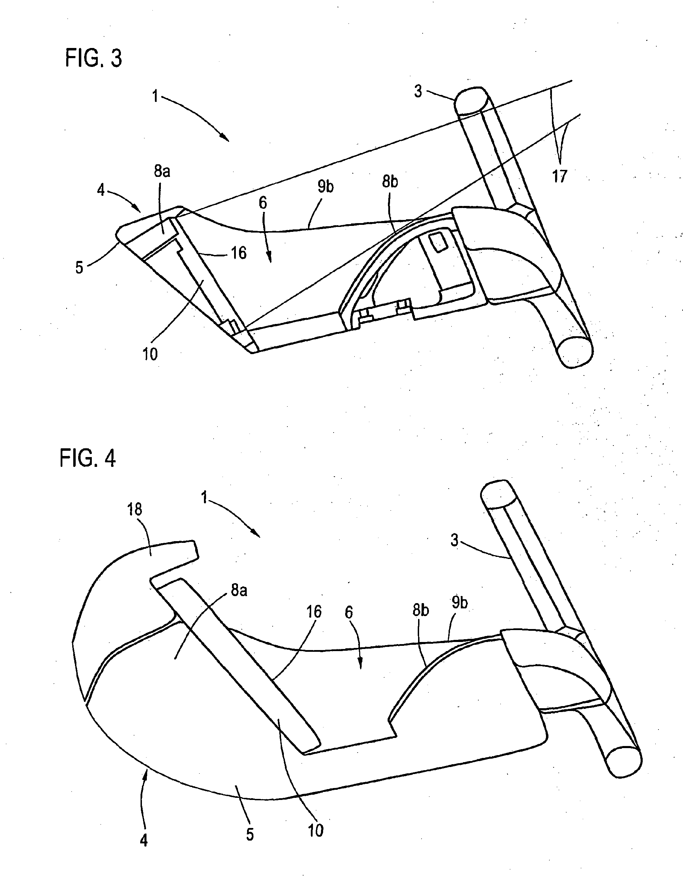

Fig. 3 zeigt eine Schnittansicht einer Prinzipdarstellung einer erfindungsgemäßen Lenkradanordnung 1 gemäß einer weiteren beispielhaften Ausführungsform. Ersichtlich ist in einer Aussparung der dem Lenkrad 3 abgewandten, sich quer zur Längsmittelachse 7 erstreckenden Wand 8a des Gehäusekörpers 5 der Lenksäule 4 ein Anzeigemittel 10 in Form eines Displays angeordnet. Die Anzeigefläche 16 des Anzeigemittels 10 zeigt dabei in die Ausnehmung 6 hinein. Die Anordnung des Anzeigemittels 10 ist derart, dass die Anzeigefläche 16 durch die Ausnehmung 6 hindurch sichtbar bzw. wahrnehmbar ist (vgl. das durch die Linien 17 angedeutete Sichtfeld des Fahrers auf die Anzeigefläche 16 durch das Lenkrad 3 hindurch).

Die maximal mögliche Anzeigefläche 16 des Anzeigemittels 10 ist im Wesentlichen durch die Abmessungen der Wand 8a bestimmt. Insbesondere ist es sonach möglich, die Lenksäule 4 selbst mit einem entsprechenden Anzeigemittel 10 zu versehen.

Wie sich aus Fig. 4 ergibt, ist es auch denkbar, dass nur ein, insbesondere unterer, Teil des Anzeigemittels 10 bzw. dessen Anzeigefläche 16 an der Wand 8a des Gehäusekörpers 5 angeordnet ist, wobei sich ein oberer Teil des Anzeigemittel 10 bzw. dessen Anzeigefläche 16 im Wesentlichen in vertikaler Richtung bis in eine durch eine einen Teil eines Armaturenbretts bildende Abdeckung 18 begrenzte Instrumententafel erstreckt. Derart ist die Verwendung eines bezüglich seiner Anzeigefläche 16 deutlich vergrößerten Anzeigemittels 10 im Vergleich zu üblichen in Instrumententafeln verbauten Anzeigemitteln 10 möglich. Eine entsprechende Anordnung eines Anzeigemittels 10 wenigstens abschnittsweise innerhalb des Gehäusekörpers 5 der Lenksäule 4 bietet Vorteile in ergonomischer sowie sicherheitstechnischer Hinsicht, da es einem Fahrer zum einen möglich ist, seinen Blick auf besonders ergonomische Weise auf die Anzeigefläche 16 des Anzeigemittels 10 respektive die dort dargestellten Inhalte zu wenden. Zum anderen ist es möglich, dass der Fahrer seinen Blick schnell wieder von den auf der Anzeigefläche 16 des Anzeigemittels 10 dargestellten Inhalten abwenden und dem aktuellen Verkehrsgeschehen zuwenden kann.

Fig. 5 zeigt eine Schnittansicht einer Prinzipdarstellung einer erfindungsgemäßen Lenkradanordnung 1 gemäß einer weiteren beispielhaften Ausführungsform. Anhand von Fig. 5 soll die mechanische Ankopplung des Lenkrads 3 an eine mit einer lenkbaren Achse des Kraftfahrzeugs verbundene Lenkachse 2 in konstruktiver wie auch funktioneller Hinsicht erläutert werden. Ersichtlich ist zwischen Lenkrad 3 und Lenkachse 2 im Bereich der Lenksäule 4, das heißt innerhalb des der Lenksäule 4 zugehörigen Gehäusekörpers 5 ein Drehbewegungen des Lenkrads 3 übertragendes Umlenkgetriebe 11 geschaltet.

Das Umlenkgetriebe 11 weist wenigstens zwei, benachbart zu der Ausnehmung 6 des Gehäusekörpers 5 der Lenksäule 4, das heißt im Bereich der Wände 8a, 8b angeordnete, als Zahnrad 12a, 12b ausgebildete Getriebeelemente auf. Ersichtlich sind die Zahnräder 12a, 12b über eine Getriebewelle 13 miteinander bewegungsgekoppelt. Hierzu weist die Getriebewelle 13 an ihren jeweiligen Enden entsprechende Getriebeelemente in Form von mit den Zahnrädern 12a, 12b kämmenden Zahnrädern 14a, 14b auf. Drehbewegungen des Lenkrads 3 werden sonach über ein drehfest mit dem Lenkrad 3 verbundenes wellenartiges Getriebeelement 15, welches wiederum drehfest mit dem Zahnrad 12a verbunden ist, über die mechanische Kopplung der Zahnräder 12b, 14b auf die Getriebewelle 13 und über die mechanische Kopplung der Zahnräder 14a, 12a auf die Lenkachse 2, welche drehfest mit dem Zahnrad 12a verbunden ist, übertragen. Ersichtlich verläuft die Getriebewelle 13 unterhalb einer gedachten Verlängerung der Lenkachse 2 in Längsrichtung in einer entsprechenden Bohrung einer die Wände 8a, 8b verbindenden horizontalen Wand 19.

Im Unterschied zu Fig. 5 zeigt Fig. 6 eine Ausführungsform, in der die Getriebewelle 13 in einer entsprechenden hierfür vorgesehenen Bohrung einer die Ausnehmung 6 seitlich begrenzenden Seitenwand 9a des Gehäusekörpers 5 der Lenksäule 4 angeordnet ist. Mithin wird die Getriebewelle 13 seitlich an der Ausnehmung 6 vorbeigeführt. Selbstverständlich könnte die Getriebewelle 13 oder eine weitere Getriebewelle 13 auch auf der rechten Seite, das heißt innerhalb der Seitenwand 9b, an der Ausnehmung 6 vorbeigeführt werden.

Das Funktionsprinzip des Umlenkgetriebes 11 entspricht dem in Fig. 5 gezeigten Umlenkgetriebe 11. Sämtliche Getriebeelemente des Umlenkgetriebes 11 sowie die Lenkachse 2 sind gestrichelt gezeichnet, da sich diese innerhalb des Gehäusekörpers 5 der Lenksäule 4 befinden.

Alternativ zu der beschriebenen rein mechanischen Bewegungskopplung des Lenkrads 3 mit der Lenkachse 2 gemäß den Fig. 5, 6 ist es auch möglich, dass die Bewegungskopplung zwischen Lenkrad 3 und lenkbarer Achse des Kraftfahrzeugs elektronisch über eine Steuereinrichtung (nicht gezeigt) gemäß dem sogenannten steer-by-wire-Prinzip erfolgt. Hierbei werden von einer Drehbewegungen des Lenkrads 3 sensierenden Sensorik (nicht gezeigt) Lenksignale erzeugt, welche an einen zur Ausführung von Lenkbewegungen der lenkbaren Achse des Kraftfahrzeugs ausgebildeten Aktor übertragen und dort in entsprechende Lenkbewegungen umgesetzt werden.

## Patentansprüche

1. Lenkradanordnung (1) für ein Kraftfahrzeug, umfassend ein mit einer lenkbaren Achse des Kraftfahrzeugs über eine Lenkachse (2) bewegungsgekoppeltes Lenkrad (3), welches Lenkrad (3) drehbar an einer einen Gehäusekörper (5) aufweisenden Lenksäule (4) angeordnet ist, **dadurch gekennzeichnet**,
dass in dem Gehäusekörper (5) wenigstens eine wenigstens durch zwei sich gegenüberliegende, quer zur Längsmittelachse (7) des Gehäusekörpers (5) erstreckende Wände (8a, 8b) begrenzte, nach oben geöffnete Ausnehmung (6) ausgebildet ist, wobei die Tiefe der Ausnehmung (6) mindestens der Lage der Längsmittelachse (7) des Gehäusekörpers (5) entspricht oder die Längsmittelachse (7) des Gehäusekörpers (5) überschreitet.

2. Lenkradanordnung nach Anspruch 1,
**dadurch gekennzeichnet**,
dass die Ausnehmung (6) ferner durch wenigstens zwei sich in Richtung der Längsmittelachse (7) des Gehäusekörpers (5) erstreckende Seitenwände (9a, 9b) des Gehäusekörpers (5) begrenzt ist.

3. Lenkradanordnung nach Anspruch 1 oder 2,
**dadurch gekennzeichnet**,
dass die Ausnehmung (6) als Durchgangsöffnung ausgebildet ist und den Gehäusekörper (5) vollkommen durchbricht.

4. Lenkradanordnung nach einem der vorangehende Ansprüche,
**dadurch gekennzeichnet**,
dass wenigstens eine der sich quer zur Längsmittelachse (7) des Gehäusekörpers (5) erstreckenden Wände (8a, 8b) geneigt bezüglich einer Vertikalebene verläuft.

5. Lenkradanordnung nach einem der vorangehenden Ansprüche **dadurch gekennzeichnet**,
dass in oder an der dem Lenkrad (3) abgewandten, sich quer zur Längsmittelachse (7) des Gehäusekörpers (5) erstreckenden Wand (8a) des Gehäusekörpers (5) wenigstens ein Anzeigemittel (10) oder ein Teil wenigstens eines Anzeigemittels (10) angeordnet ist.

6. Lenkradanordnung nach einem der vorangehenden Ansprüche, **dadurch gekennzeichnet**,
dass zwischen Lenkrad (3) und Lenkachse (2) im Bereich der Lenksäule (4) wenigstens ein Drehbewegungen des Lenkrads (3) übertragendes Umlenkgetriebe (11) geschaltet ist.

7. Lenkradanordnung nach Anspruch 6,
**dadurch gekennzeichnet**,
dass das Umlenkgetriebe (11) wenigstens zwei, benachbart zu der Ausnehmung (6) angeordnete, insbesondere als Zahnrad (12a, 12b) ausgebildete, Getriebeelemente aufweist, welche Getriebeelemente über wenigstens eine diese verbindende Getriebewelle (13) miteinander bewegungsgekoppelt sind.

8. Lenkradanordnung nach Anspruch 7,
**dadurch gekennzeichnet**,
dass die Getriebewelle (13) in einer Bohrung einer die Ausnehmung (6) seitlich begrenzenden Seitenwand (9a, 9b) des Gehäusekörpers (5) angeordnet ist.

9. Lenkradanordnung nach einem der Ansprüche 1 bis 5,
**dadurch gekennzeichnet**,
dass die Bewegungskopplung zwischen Lenkrad (3) und lenkbarer Achse elektronisch über eine, insbesondere wenigstens eine Drehbewegungen des Lenkrads sensierende Sensorik, welche mit wenigstens einem zur Ausführung von Lenkbewegungen der lenkbaren Achse ausgebildeten Aktor kommuniziert, aufweisende, Steuereinrichtung erfolgt.

10. Kraftfahrzeug, umfassend eine Lenkradanordnung (1) nach einem der vorangehenden Ansprüche.

## Claims

1. Steering wheel arrangement (1) for a motor vehicle, comprising a steering wheel (3) movably coupled to a steerable axle of the motor vehicle by a steering axle (2), which steering wheel (3) is rotatably mounted on a steering column (4) comprising a housing body (5), **characterised in that** at least one recess (6), which at least is delimited by two opposing walls (8a, 8b) extending transversely to the longitudinal centre axis (7) of the housing body (5) and is open at the top, is formed in the housing body (5), the depth of the recess (6) at least corresponding to the position of the longitudinal centre axis (7) of the housing body (5) or exceeding the longitudinal centre axis (7) of the housing body (5).

2. Steering wheel arrangement according to claim 1, **characterised in that** the recess (6) is also delimited by at least two side walls (9a, 9b) of the housing body (5) which extend in the direction of the longitudinal centre axis (7) of the housing body (5).

3. Steering wheel arrangement according to either claim 1 or claim 2, **characterised in that** the recess (6) is formed as a through opening and fully penetrates the housing body (5).

4. Steering wheel arrangement according to any of the preceding claims, **characterised in that** at least one of the walls (8a, 8b) extending transversely to the longitudinal centre axis (7) of the housing body (5) is inclined relative to a vertical plane.

5. Steering wheel arrangement according to any of the preceding claims, **characterised in that** at least one display means (10) or part of at least one display means (10) is arranged in or on the wall (8a) of the housing body (5) which is remote from the steering wheel (3) and extends transversely to the longitudinal centre axis (7) of the housing body (5).

6. Steering wheel arrangement according to any of the preceding claims, **characterised in that** at least one angle gear (11), which transmits rotary movements of the steering wheel (3), is connected between the steering wheel (3) and the steering axle (2) in the region of the steering column (4).

7. Steering wheel arrangement according to claim 6, **characterised in that** the angle gear (11) comprises at least two gear elements, arranged adjacent to the recess (6) and more particularly formed as toothed wheels (12a, 12b), which gear elements are movably intercoupled by means of at least one gear shaft (13) connecting said gear elements.

8. Steering wheel arrangement according to claim 7, **characterised in that** the gear shaft (13) is arranged in an aperture in a side wall (9a, 9b) of the housing body (5) laterally delimiting the recess (6).

9. Steering wheel arrangement according to any of claims 1 to 5, **characterised in that** the movable coupling between the steering wheel (3) and the steerable axle is established electronically by means of a control device, in particular a control device comprising at least one sensor system which senses rotary movements of the steering wheel and communicates with at least one actuator which is configured to carry out steering movements of the steerable axle.

10. Motor vehicle comprising a steering wheel arrangement (1) according to any of the preceding claims.

## Revendications

1. Ensemble de volant de direction (1) pour un véhicule automobile, comprenant un volant de direction (3) couplé en mouvement avec un axe orientable du véhicule automobile via un axe directeur (2), lequel volant de direction (3) est monté à rotation sur une colonne de direction (4) présentant un corps de boîtier (5),
**caractérisé en ce que**,
dans le corps de boîtier (5) est ménagée au moins une cavité (6) ouverte vers le haut et délimitée au moins par deux parois (8a, 8b) en regard l'une de l'autre et s'étendant transversalement à l'axe longitudinal central (7) du corps de boîtier (5), dans lequel la profondeur de la cavité (6) correspond au moins à la position de l'axe longitudinal central (7) du corps de boîtier (5) ou dépasse l'axe longitudinal central (7) du corps de boîtier (5).

2. Ensemble de volant de direction selon la revendication 1,
**caractérisé en ce que** :
la cavité (6) est entre délimitée par au moins deux parois latérales (9a, 9b) du corps de boîtier (5) s'étendant dans la direction de l'axe longitudinal central (7) du corps de boîtier (5).

3. Ensemble de volant de direction selon la revendication 1 ou la revendication 2,
**caractérisé en ce que** :
la cavité (6) est conformée en ouverture de passage et traverse complètement le corps de boîtier (5).

4. Ensemble de volant de direction selon l'une quelconque des revendications précédentes, **caractérisé en ce que** :
au moins l'une des parois (8a, 8b) s'étendant transversalement à l'axe longitudinal central (7) du corps de boîtier (5) est inclinée par rapport à un plan vertical.

5. Ensemble de volant de direction selon l'une quelconque des revendications précédentes,
**caractérisé en ce que**,
dans ou sur la paroi (8a) du corps de boîtier (5) opposée au volant de direction (3) et s'étendant transversalement à l'axe longitudinal central (7) du corps de boîtier (5) est aménagé au moins un moyen d'affichage (10) ou une partie au moins d'un moyen d'affichage (10).

6. Ensemble de volant de direction selon l'une quelconque des revendications précédentes,
**caractérisé en ce que**,
entre le volant de direction (3) et l'axe directeur (2), dans la zone de la colonne de direction (4), est monté au moins un renvoi de commande (11) qui transmet des mouvements de rotation du volant de direction (3).

7. Ensemble de volant de direction selon la revendication 6,
**caractérisé en ce que** :
le renvoi de commande (11) présente au moins deux éléments de transmission conformés en roues dentées (12a, 12b) aménagées au voisinage de la cavité (6), lesquels éléments de transmission sont couplés en mouvement l'un avec l'autre via au moins un arbre de transmission (13) qui les relie.

8. Ensemble de volant de direction selon la revendication 7,
**caractérisé en ce que** :
l'arbre de transmission (13) est aménagé dans un alésage d'une paroi latérale (9a, 9b) du corps de boîtier (5) délimitant latéralement la cavité (6).

9. Ensemble de volant de direction selon l'une quelconque des revendications 1 à 5,
**caractérisé en ce que** :
le couplage de mouvement entre le volant de direction (3) et l'axe orientable se fait par voie électronique via un système de capteurs, en particulier au moins un système de capteurs détectant des mouvements de rotation du volant de direction, lequel système de capteurs communique avec au moins un actionneur conçu pour assurer des mouvements directeurs de l'axe orientable.

10. Véhicule automobile comprenant un ensemble de volant de direction (1) selon l'une quelconque des revendications précédentes.
